(19) Europäisches Patentamt
European Patent Office
Office européen des brevets

(11) Publication number : **0 663 410 A1**

# (12) EUROPEAN PATENT APPLICATION

(21) Application number : **95300141.9**

(22) Date of filing : **11.01.95**

(51) Int. Cl.$^6$ : **C08F 291/00,** C08F 279/02, C08L 51/04

(30) Priority : **18.01.94 US 182819**

(43) Date of publication of application : **19.07.95 Bulletin 95/29**

(84) Designated Contracting States : **DE ES FR GB IT NL**

(71) Applicant : **GENERAL ELECTRIC COMPANY**
**1 River Road**
**Schenectady, NY 12345 (US)**

(72) Inventor : **van Gisbergen, Josephus Gerardus M.**
**Kaatsbaan 40**
**NL-4611 JX Bergen op Zoom (NL)**
Inventor : **Faber, Rein Mollerus**
**Scandinaviestraat 14**
**NL-4614 JR Bergen op Zoom (NL)**

(74) Representative : **Szary, Anne Catherine et al**
**London Patent Operation,**
**GE Technical Services Co. Inc.,**
**Essex House,**
**12-13 Essex Street**
**London WC2R 3AA (GB)**

## (54) Graft copolymers useful as flame retardant additives.

(57) The phosphate containing graft copolymers provided have a graft superstrate and a rubbery substrate, wherein the graft superstrate contains a methacrylate functional phosphate. The graft copolymer can be obtained at relatively high reaction rates and high conversion levels, and may be used as a flame retardant additive for thermoplastic compositions. The flame retardant graft copolymers are non-plasticizing and do not require the presence of halogens for flame retarded effectiveness. The flame retarded thermoplastic compositions may be used as materials suitable for molding articles.

EP 0 663 410 A1

## BACKGROUND OF THE INVENTION

### Field of the Invention

The present invention relates to flame retardant graft (co)polymers, and more particularly relates to graft (co)polymers having flame retardant amounts of a phosphate grafted into the graft portion of the graft (co)polymer.

### Description of the Related Art

The addition of low molecular weight phosphates to impart flame retardant properties to thermoplastic polymers is generally known. However, low molecular weight phosphates can result in plasticization of the polymer composition, and thereby negatively affect the temperature resistance of the thermoplastic composition, as evidenced by a reduction in the heat distortion temperature thereof. Additionally, low molecular weight phosphates can exhibit a tendency to migrate to the surface of the thermoplastic composition during molding operations, which results in the "juicing" of the low molecular weight phosphate onto the surface of parts molded from the thermoplastic composition. Chemically binding the phosphate to a polymer base can result in reductions in this "juicing" phenomenon, however, phosphate bound in polymeric form has typically required relatively larger amounts of phosphates to be present in the polymeric composition in order to achieve desired levels of flame retardant behavior. Efforts to incorporate larger amounts of phosphate into polymeric form, have typically resulted in relatively low levels of conversion, and relatively low reaction rates. Additionally, problems related to undesired crosslinking can occur, in the presence of impurities in the phosphate, for example di-functional phosphate or from chain transfer through the phosphorus atom. Similarly, prior flame retardant efforts have frequently utilized halogen materials in the presence of the polymeric phosphate resulting in the undesired effect of producing potentially undesirable halogen containing gases upon burning of the halogen containing thermoplastic material. Prior efforts to polymerize phosphates into polymeric products, have typically required undesirably long reaction times, for example reaction times in excess of 16 hours, and more frequently closer to 48 hours. Additionally, reaction of phosphorus containing materials such as phosphonates reacted in via gamma radiation have typically resulted in low molecular weight products, and there is no guarantee that utilization of the phosphonate will yield the desired flame retardant properties.

Accordingly, there is a desire to provide a phosphate containing (co)polymer, more particularly a phosphate containing graft (co)polymer, which can be obtained via process which exhibits fast reaction rates and high levels of conversion. The resulting graft (co)polymer exhibits flame retardant properties, and may be used to impact modify thermoplastic compositions and simultaneously provide those compositions with a halogen free flame retardant. Preferably the entire compositions are substantially halogen free.

### Summary of the Invention

A graft (co)polymer obtained by reacting onto a diene rubber base, a graft of vinyl aromatic monomer, unsaturated nitrile monomer, and a reactive phosphate of the formula

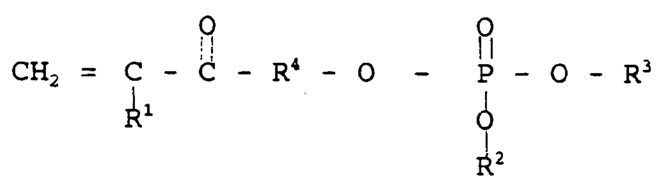

Wherein $R^1$, $R^2$, $R^3$ and $R^4$ are defined as below. The resultant graft (co)polymer exhibit flame retardant properties, and can be used as a flame retardant additive without the undesirable effects of plasticization and without the presence of halogen containing materials, more specifically bromine containing materials which can exhibit undesired properties. The graft (co)polymer can be made by an emulsion process, and can be produced at a relatively high reaction rate and at a relatively high conversion level.

### Detailed Description of the Invention

The reactive phosphate is a vinyl reactive phosphate of the formula

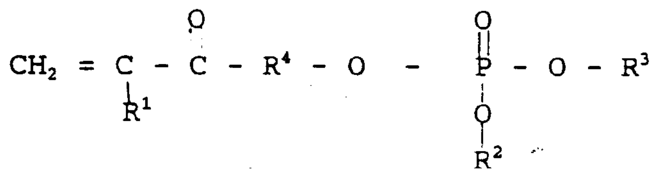

Wherein $R^1$ is preferably selected from hydrogen and alkyl groups having from 1 to 8 carbon atoms, and more preferably is selected from the group consisting of methyl, ethyl, propyl and butyl, and tertbutyl, and most preferably is methyl; $R^2$ and $R^3$ are independently selected from alkyl groups having from 1 to 20 carbon atoms and aryl groups having from 6 to 20 carbon atoms, and more preferably are phenyl groups; and $R^4$ is a $C_1$-$C_5$-alkylene, $C_2$-$C_5$-alkylidene, or $C_5$-$C_6$-cycloalkylidene, more preferably is an ethyl group. The preferred react phosphate monomer is diphenyl-2 methacryloyloxyethylphosphate having the following formula:

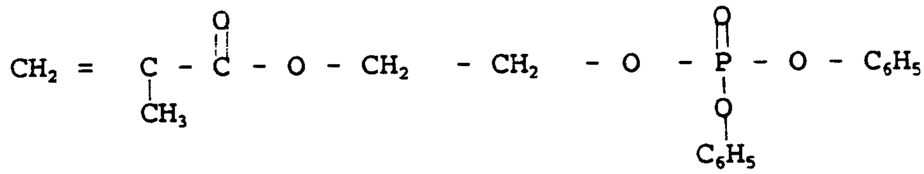

The vinyl aromatic monomer is preferably selected from the group consisting of styrene and alphamethyl styrene.

The unsaturated nitrile is preferably selected from the group consisting of acrylonitrile and methylacrylonitrile. Optionally the vinyl aromatic monomer and the unsaturated nitrile monomer may individually or in combination be substituted with in part or in whole with a monomer selected from the group consisting of alkyl (meth)acrylates, maleic anhydride, maleimide, and more specifically with methylmethacrylate.

The rubber substrate may be an alkyl acrylate rubber, and olefic rubber such as ethylenepropylene-diene rubber. Preferably the rubber is a substrate, a diene rubber substrate, preferably the rubbery substrate has a number average diameter of between 50 and 700 nanometers, more preferably between 100 and 500 nanometers, more preferably between 200 and 400 nanometers, which is formed from at least 1 diene monomer of the formula:

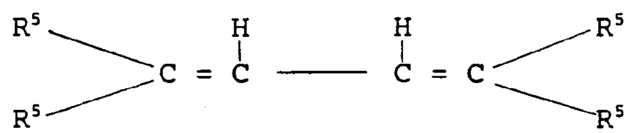

Wherein $R_5$ is selected from the group consisting of hydrogen and the alkyl groups containing from 1 to 5 carbon atoms. Examples of the diene monomer include butadiene, isoprene, 1,3-heptadiene, methyl-1,3-pentadiene, 2-ethyl-1,3 pentadiene, and mixtures thereof. Preferably, the diene monomer comprises butadiene, wherein the rubber substrate comprises a polybutadiene substrate. Alternatively, at least one additional vinyl aromatic monomer and/or unsaturated nitrile monomer may be included in the rubber substrate, thereby forming for example, a styrene-butadiene rubber substrate, or a acrylonitrile-butadiene rubber substrate. Preferably the rubber substrate is formed from at least 50 weight percent of 1,3 butadiene based on the total weight of the rubber substrate. As previously mentioned, preferably the graft copolymer is free of halogens, however if it is desired that halogen material be present, the halogen may be present in the vinyl aromatic monomer, the unsaturated nitrile monomer or in the rubber substrate, for example by employing a halogenated vinyl aromatic monomer, a halogenated unsaturated nitrile monomer, or a halogenated diene monomer. If a halogenated material is utilized in the graft copolymer, then the advantages of utilizing a non-halogenated flame retardant may not be present, however, the non-platicizing properties of the graft copolymer should still be present, as well as the enhanced reaction rate and conversion level achieved in the process for making the present graft copolymer. The rubber substrate is preferably present at a level of from 5 to 75 percent by weight based on the total weight of the graft copolymer, more preferably from 10 to 70 percent by weight thereof, and most preferably at a level of from 20 to 60 percent by weight thereof, correspondingly the graft superstrate which is preferably formed from the vinyl aromatic monomer, the unsaturated nitrile monomer, and the reactive phosphate, is present at a level of from 25 to 95 percent by weight based on the total weight of the graft copolymer,

more preferably at a level of from 30 to 90 percent by weight based on the total weight of the graft copolymer, and most preferably present at a level of from 40 to 80 percent by weight based on the total weight of the graft copolymer. The vinyl aromatic monomer which is used to help form the graft superstrate, is preferably present at a level of from 5 to 40 percent by weight based on the total weight of the graft copolymer, and more preferably present at a level of from 10 to 30 percent by weight based on the total weight of the graft copolymer, and most preferably present at a level of from 15 to 25 percent by weight based on the total weight of the graft copolymer; the acrylonitrile of the graft superstrate, is preferably present at a level of from 1 to 20 percent by weight based on the total weight of the graft copolymer, and more preferably present at a level of from 3 to 10 percent by weight based on the total weight of the graft copolymer, and most preferably present at a level of from 4 to 8 percent by weight based on the total weight of the graft copolymer; and the reactive phosphate of the formula set out above, is preferably present at a level of from 1 to 40 percent based on the total weight of the graft copolymer, more preferably at a level of from 5 to 30 percent by weight based on the total weight of the graft copolymer, and most preferably present at a level of from 15 to 25 percent by weight based on the total weight of the graft copolymer. The resultant graft copolymer when blended with the thermoplastics provides those thermoplastics with flame retarding properties and is itself non-plasticizing in those compositions. The graft copolymer of the present invention may be utilized to provide dual properties of enhanced impact strength and enhanced flame retardancy to thermoplastic compositions, and may be included in such thermoplastic compositions preferably at a level of from 5 to 95 percent by weight based on the total weight of the composition, more preferably at a level of from 10 to 50 percent by weight based on the total weight of the composition, and most preferably present at a level of from 10 to 25 percent by weight based on total weight of the composition. The thermoplastic compositions which are enhanced by the present graft copolymers also comprise the enhanced thermoplastic polymer which is preferably present at a level of from 5 to 95 percent by weight based on the total weight of the composition, more preferably present at a level of from 50 to 90 percent by weight based on the total weight of the composition, and more preferably present at a level of from 75 to 90 percent by weight based on the total weight of the composition. The thermoplastic polymer is preferably selected from the group consisting of thermoplastic polyesters, specifically saturated thermoplastic polyesters such as polyethylene terephthalate and polybutylene terephthalate, polycarbonate resin such as aromatic polycarbonate resins for example bisphenyl A polycarbonate resin, and optionally polyvinyl chloride resin.

## Examples

The reactive phosphate used in these polymerizations is a commercial product made by Daihachi chemicals known as MR-260. The chemical name of the product is diphenyl-2-methacryloyloxyethylphosphate

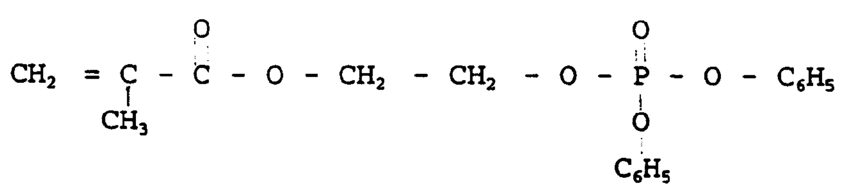

Example 1.

173.35 parts of water, 53.6 parts of polybutadiene rubber particles with an average particle size of 300 nm and approximately 1 part of an organic acid based soap were combined. A mixture of 17.3 parts Styrene, 5.9 parts Acrylonitrile, 23.2 parts of MR-260 and 0.15 parts of t-DDM (chaintransfer agent) were added and the mixture was left for 40 minutes. Temperature is 60° C. Then appropriate amounts of initiator and activator were added over a period of 2 hours. Reaction temperature was increased to 70° after 80 minutes. After that, the reaction mixture was cooked for an additional 30 minutes at a temperature of 70° C. This is the normal reaction schedule for the production of an ABS graft polymer.

The solids content after the reaction was 34.2%. Theoretical the solids content can only be 33.6, but difference is within the experimental error. Measurement indicates that the reaction is carried out close to 100% conversion and that the conventional grafting reaction of Styrene and Acrylonitrile is not hampered by the presence of the phosphate.

A standard coagulation technique using Sulfuric acid was applied to the final latex and after drying a white powder was isolated. Insoluble % in Acetone is 89.8. Weight average molecular weight of the remaining free fraction is 62,000 g/mole.

Example 2

Similar procedure as in example 1 was followed but no presoak of monomers was applied. This time the MR-260 was added in a period of 50 minutes. After 50 minutes, the Styrene and Acrylonitrile were added. Same temperature and time profile was followed.

Solids content this time was 33.6%. Insoluble fraction of final product is 84.3% and weight average molecular weight of the free fraction is 149,000 g/mole. Results indicate that graft and free rigid characteristics can be modified by adapting the reaction procedure and that the values obtained are in the range typically observed for ABS products.

Example 3

A solution of 132 parts water and 0.12 parts Polyvinyl alcohol was prepared. 37.50 parts of Styrene, 12.5 parts of Acrylonitrile, 50 parts of MR-260 and 0.5 parts of t-DDM was added, as well as 0.15 parts of a radical initiator. The reaction was carried out at a temperature of 75° C during 8 hours. After filtering and drying 96 grams (out of 100) were retrieved in the form of small beads. Again a very good conversion, but reaction times are long. Moreover the material proved to be crosslinked, insoluble fraction is 60%, although initially no crosslinked rubber (compare with graft reactions) was present. Molecular weight of the soluble part is 85,000 g/mole.

Example 4

Grafted phosphate copolymer as described in example 2 was blended with a commercial SAN copolymer. The properties of the composition were compared with those of a standard SAN/ABS composition and one where a liquid phosphate is added. Polybutadiene level is about the same in all compositions

| | | | |
|---|---|---|---|
| SAN | 60 | 60 | 60 |
| ABS - np | 40 | | 40 |
| ABS - ex 2 | | 40 | |
| liquid phosphate | - | | 20 |
| Notched Izod (ftlbs/in) | 7.2 | 5.1 | 0.8 |
| HDT, 0.125" @ 264 PSI(°F) | 183 | 181 | 136 |
| Limited Oxygen Index (%) | 18.5 | 19.5 | 20.5 |

As can be seen, using the bound phosphate increases the FR resistance of the final composition and hardly affects impact performance and temperature resistance, whereas addition of the liquid phosphate results in a dramatic decline of those properties whilst improving the FR-resistance. The ABS - ex 2 is the ABS which contains grafted phosphate as obtained in example 2. The ABS - np is an ABS which is conventional and which does not contain grafted phosphate.

## Claims

1. A graft copolymer comprising a graft superstrate and a rubbery substrate, said graft superstrate comprising a vinyl aromatic monomer, an unsaturated nitrile monomer, and a phosphate of the formula

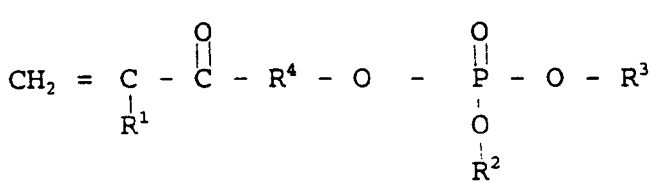

where $R^1$ is selected from the group consisting of hydrogen and alkyl groups, $R^4$ is selected from the group

consisting of divalent hydrocarbons having from 1 to 4 carbon atoms, $R^2$ is selected from the group consisting of alkyl groups and aryl groups, and $R^3$ is selected from the group consisting of alkyl groups and aryl groups.

2. The graft copolymer of Claim 1, wherein $R^1$ is methyl.

3. The graft copolymer of Claim 1 or Claim 2, wherein $R^2$ and $R^3$ are each phenyl.

4. The composition of any preceding claim, wherein said phosphate is of the formula

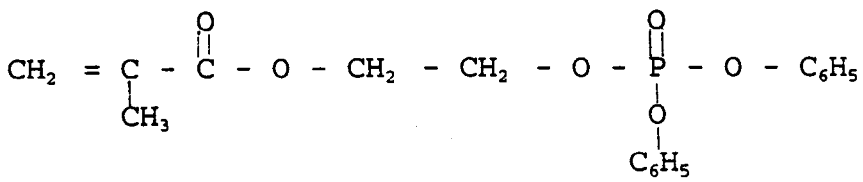

5. The graft copolymer of any preceding claim wherein said rubbery substrate is a polybutadiene rubber substrate.

6. The composition of any preceding claim, wherein said vinyl aromatic monomer is styrene and said saturated nitrile monomer is acrylonitrile.

7. The composition of any preceding claim, wherein said vinyl aromatic monomer is present at a level of from 15 to 25 percent by weight based on the total weight of the graft copolymer, said unsaturated nitrile monomer is present at a level of from 4 to 8 percent by weight based on the total weight of the graft copolymer, said reactive phosphate being present at a level of from 15 to 25 percent based on the total weight of the graft copolymer, and said rubbery substrate being present at a level of from 20 to 60 percent by weight based on the total weight of the composition.

8. A rubbery graft copolymer comprising a diene rubber substrate and a graft superstrate wherein said graft superstrate comprises a vinyl aromatic monomer, an unsaturated nitrile monomer, and methylacrylic functional phosphate.

9. The graft copolymer of Claim 8, wherein said vinyl aromatic monomer is present at a level of from 5 to 40 percent by weight based on the total weight of the graft copolymer, said unsaturated nitrile monomer being present at a level of from 1 to 20 percent by weight based on the total weight of the graft copolymer, and said methylacrylic phosphate being present at a level of from 1 to 40 percent by weight based on the total weight of the graft copolymer, said rubber substrate being present at a level of from 5 to 75 percent by weight based on the total weight of the graft copolymer.

10. A thermoplastic composition comprising a flame retarding effective amount of the graft copolymer of any preceding claim.

11. The thermoplastic composition of Claim 10, wherein said thermoplastic composition comprises from 10 to 50 percent by weight of said graft copolymer and from 50 to 90 percent by weight of a polymer selected from the group consisting of polyesters, polycarbonates, polyphenylene ethers and polyvinyl chlorides.

12. A process comprising emulsion polymerization of a vinyl aromatic monomer, an unsaturated nitrile monomer, and a methacrylate functional phosphate in the presence of diene rubber particles.

13. The process of Claim 12, wherein said methacrylate functional phosphate is represented by the general formula

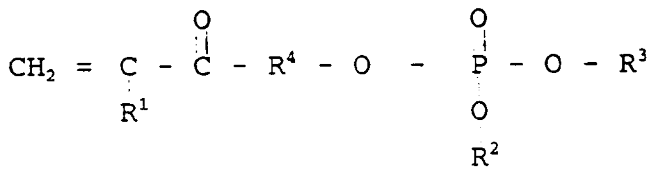

wherein $R^1$ is selected from hydrogen alkyl groups, $R^4$ is a divalent alkylene group, and $R^2$ and $R^3$ are independently selected from the group consisting of alkyl groups and aryl groups.

**14.** The process of Claim 12 wherein said methacrylate functional phosphate is represented by the formula

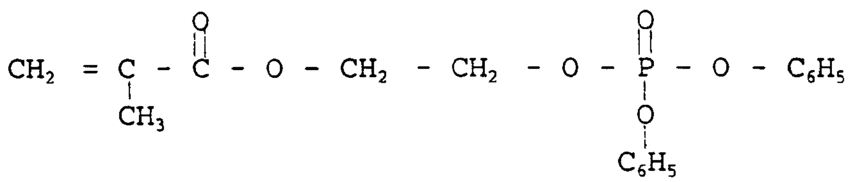

.

European Patent Office

# EUROPEAN SEARCH REPORT

Application Number
EP 95 30 0141

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 534 297 (BASF AG)<br>* page 10, line 27-40; claim 1 *<br>--- | 1-8,10, 12-14 | C08F291/00<br>C08F279/02<br>C08L51/04 |
| A | DATABASES "CHEMICAL ABSTRACTS" and "REGISTRY" (HOST: STN), abstract 105:25409 Colombus, OH, USA; & JP-A-60 255 809 (JAPAN SYNTHETIC RUBBER CO.) 17-12-85<br>* Abstract and R.N. 103024-14-2 *<br>----- | 1,8 | |
| | | | TECHNICAL FIELDS SEARCHED (Int.Cl.6) |
| | | | C08F |

The present search report has been drawn up for all claims

| Place of search | Date of completion of the search | Examiner |
|---|---|---|
| THE HAGUE | 19 April 1995 | Glikman, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)